(19) Europäisches Patentamt
European Patent Office
Office européen des brevets

(11) **EP 3 422 557 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(51) Int Cl.:
***H02P 5/74*** *(2006.01)*

(21) Anmeldenummer: **17178588.4**

(22) Anmeldetag: **29.06.2017**

(54) **VERFAHREN ZUM DETEKTIEREN VON BELASTUNGSUNTERSCHIEDEN**

METHOD FOR DETECTING LOAD DIFFERENCES

PROCÉDÉ DE DÉTECTION DE DIFFÉRENCES DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.01.2019 Patentblatt 2019/01**

(73) Patentinhaber: **Bombardier Transportation GmbH 10785 Berlin (DE)**

(72) Erfinder:
• **WOLBANK, Thomas
1040 Wien (AT)**
• **BAZANT, Martin
8708 Maennedorf (CH)**
• **VOGELSBERGER, Markus
6152 Trins (AT)**

(74) Vertreter: **Sonn & Partner Patentanwälte Riemergasse 14 1010 Wien (AT)**

(56) Entgegenhaltungen:
**JP-A- 2011 072 062     US-A1- 2007 273 310**

**Beschreibung**

Die Erfindung betrifft ein Verfahren zum Detektieren von Belastungsunterschieden zwischen zumindest einer ersten elektrischen Maschine und zumindest einer parallel dazu geschalteten zweiten elektrischen Maschine, welche von einem Umrichter gespeist werden, wobei die Maschinen je über drei Zuleitungen an den Umrichter angeschlossen sind.

Weiter betrifft die Erfindung eine Vorrichtung zum Detektieren von Belastungsunterschieden zwischen parallelen elektrischen Maschinen mit drei ersten Zuleitungen zu zumindest einer ersten Maschine und drei weiteren Zuleitungen zu zumindest einer zweiten Maschine.

Bei vielen Anwendungen von elektrischen Maschinen mit einem Umrichter sind Strommesssensoren in den Zuleitungen notwendig, um den aktuellen Betriebszustand der Maschine korrekt erfassen zu können. So werden beispielsweise bei der Regelung einer Asynchronmaschine an einem Umrichter in den einzelnen Zuleitungen Strommesssensoren eingesetzt, welche die gemessenen Stromwerte einer Regeleinrichtung zur Verfügung stellen. Dadurch ist es möglich, auf den aktuellen Betriebszustand der zu regelnden Maschine zu schließen und entsprechend auf Veränderungen während des Betriebs der Asynchronmaschine zu reagieren. Werden drei Zuleitungen zu der Asynchronmaschine verwendet, sind demnach drei Strommesssensoren notwendig. Durch Anwendung der Kirchhoffschen Knotenregel kann bekanntermaßen einer der Strommesssensoren eingespart werden, ohne dabei einen Informationenverlust über die Ströme in den Zuleitungen hinnehmen zu müssen, wodurch nicht nur mögliche Fehlerquellen ausgeschlossen werden können, sondern auch die Kosten reduziert werden.

Werden mehrere elektrische Maschinen parallel an einem gemeinsamen Umrichter betrieben, so können diese teilweise unterschiedlichen Belastungen ausgesetzt sein und daher voneinander abweichende Betriebszustände einnehmen. Für eine gezielte Regelung ist es aus diesem Grund essentiell, die Abweichungen der einzelnen Maschinen voneinander zu bestimmen oder zumindest zu schätzen.

Die Speisung mehrerer Antriebe mit einem gemeinsamen Umrichter wird an manchen Literaturstellen auch als "Gruppenantrieb" oder "Multi Motor" bezeichnet. Dieses Konzept findet unter anderem bei Straßenbahnen oder Zügen Anwendung und wird stetig weiterentwickelt. Dazu sind aus dem Stand der Technik mehrere Vorrichtungen und Verfahren bekannt.

So zeigt unter anderem die US 2009/0309529 A1 ein System zum Betreiben mehrerer paralleler (Linear-) Motoren, von denen jeder einzelne über 3 Zuleitungsstränge verfügt. In jeweils zwei der Zuleitungsstränge sind Stromsensoren angeordnet, um die Betriebszustände der einzelnen Motoren feststellen und diese vor Überlastung schützen zu können. Für die eigentliche Regelung der Motoren sind jedoch andere Stromsensoren vorgesehen, welche die Summenströme in den Zuleitungen vor der Aufteilung zu den einzelnen Motoren messen.

Die US 2006/0012322 A1 offenbart eine Antriebsvorrichtung zum Betreiben mehrerer paralleler Asynchronmaschinen (ASM) an einem Umrichter. In den gemeinsamen Zuleitungssträngen der ASM sind Stromsensoren vorgesehen, mit deren Messwerten ein Abweichungsmaß zur Erfassung von Belastungsunterschieden zwischen den einzelnen ASM bestimmt werden kann. Auf Basis dieses Abweichungsmaßes werden zudem entsprechende Regelungsmaßnahmen vorgeschlagen.

Die US 4,298,831 zeigt ebenfalls eine Vorrichtung für die Regelung mehrerer paralleler ASM, wobei in jedem den einzelnen Zuleitungsstränge der ASM Stromsensoren angeordnet sind.

Die Patentschrift JP 2002112404A offenbart mehrere Varianten zur Regelung paralleler ASM. Eine spezielle Ausführungsform betrifft die Anordnung von Stromsensoren in den gleichen Phasen mehrerer ASM, wobei unterschiedliche Belastungen der Maschinen durch Vergleichen der gemessenen Strommesswerte festgestellt werden können.

Die JP 2011 072062 A offenbart eine Zusammenschaltung zumindest zweier permanentmagneterregter Synchronmaschinen im BLDC-Modus, die an einem gemeinsamen Umrichter betrieben werden. Dabei wird mit Hilfe eines Summenstromwandlers die Stromsumme zweier Zuleitungsströme der ersten Synchronmaschine und eines Zuleitungsstromes der zweiten Synchronmaschine ermittelt, um mit Hilfe des Vorzeichens der Stromsumme etwaige Ausfälle der Synchronmaschinen im laufenden Betrieb feststellen zu können.

Daneben ist aus der US 2007/273310 A1 eine Parallelschaltung zweier elektrischer Maschinen an einem gemeinsamen Umrichter bekannt, wobei in zumindest zwei Zuleitungen jeder Maschine Strommesssensoren eingefügt sind.

Nachteilig beim Stand der Technik ist zum einen die hohe Anzahl an benötigten Strommesssensoren, welche bei einer häufig vorzufindenden Variante in jeweils drei oder zwei Motorzuleitungsstränge angeordnet sind. Die Anzahl der Strommesssensoren steigt daher bei dieser Anordnung der Sensoren proportional zur Anzahl der Antriebe und dem Faktor 2 oder 3. Jeder weitere Strommesssensor birgt jedoch die Gefahr einer potentiellen Fehlerquelle und verursacht zudem zusätzliche Kosten, die es zu vermeiden gilt.

Zum anderen können bei der Variante mit Strommesssensoren in den gemeinsamen Zuleitungssträngen zu mehreren elektrischen Maschinen keine genaueren Aussagen über den Zustand der einzelnen Maschinen getätigt werden, da lediglich eine Art Durchschnittsinformation aller Maschinen vorliegt. Dadurch können zwar Stromsensoren eingespart werden, jedoch geschieht dies auf Kosten der verwertbaren Informationen.

Zudem ist es bei der Anordnung mit Stromsensoren in den gleichen Phasen (beispielsweise JP 2002112404A) mehrerer paralleler Maschinen nicht möglich, diese gezielt zu regeln oder den Betriebszustand einzelner Maschinen zu bestimmen, da lediglich Messwerte verglichen, aber keine ausreichenden Informationen gewonnen werden, die einer genauen Regelung zugrunde gelegt werden könnten.

Demgegenüber besteht die Aufgabe der vorliegenden Erfindung darin, zumindest einzelne Nachteile des Standes der Technik zu beseitigen bzw. zu lindern. Die Erfindung setzt sich insbesondere zum Ziel, ein Verfahren bzw. eine Vorrichtung der eingangs erwähnten Art zu schaffen, das/die es erlaubt, Stromsensoren einzusparen, ohne dass damit ein größerer Informationsverlust einhergeht.

Diese Aufgabe wird durch ein Verfahren mit den Merkmalen von Anspruch 1 und einer Vorrichtung mit den Merkmalen nach Anspruch 10 gelöst. Bevorzugte Ausführungsformen der Erfindung sind in den abhängigen Ansprüchen angegeben.

Erfindungsgemäß ist daher vorgesehen, dass in zwei Zuleitungen der zumindest einen ersten Maschine sowie in einer der Zuleitungen der zumindest einen zweiten Maschine die Ströme mit Hilfe von Strommesssensoren in den jeweiligen Zuleitungen gemessen werden und auf Basis der gemessenen Stromwerte der zumindest einen ersten Maschine die korrespondierenden nicht gemessenen Ströme der zumindest einen zweiten

Maschine geschätzt werden, und dass der geschätzte Summenstrom der Zuleitungen der zumindest einen zweiten Maschine als Abweichungsmaß der Ströme der zumindest einen zweiten Maschine von der zumindest einen ersten Maschine erfasst wird.

Dem erfindungsgemäßen Verfahren liegt daher die Annahme zugrunde, dass in den nicht gemessenen Zuleitungen der zumindest einen zweiten Maschine dieselben Ströme fließen wie in den korrespondierenden Zuleitungen der zumindest einen ersten Maschine. "Korrespondierend" bedeutet in diesem Zusammenhang "die gleiche Zuleitung/Phase". Bei kleinen Abweichungen der Belastung wird diese Schätzung in guter Näherung zutreffend sein.

Üblicherweise werden die drei Wicklungsstränge bzw. Zuleitungen zu einer elektrischen Maschine mit U, V und W bezeichnet und den elektrischen Größen zur Unterscheidung als tiefgestellter Index beigefügt. Um die elektrischen Größen der zumindest einen ersten Maschine von den elektrischen Größen der zumindest einen zweiten Maschine unterscheiden zu können, wird zudem der Index 1 bzw. 2 verwendet. Weiter werden geschätzte Größen mit einem DachZeichen versehen. Der geschätzte Strom in der Zuleitung U zur zumindest einen zweiten Maschine wird daher beispielsweise mit $\hat{I}_{U2}$ bezeichnet. Im Folgenden wird zudem in bezogenen Größen gerechnet. Fließt daher in einer Zuleitung der Nennstrom, so hat der Strom den Wert 1.

Die verwendeten elektrischen Maschinen können insbesondere Asynchronmaschinen sein. Die Ströme in den Zuleitungen der zumindest einen ersten Maschine können mit nur zwei Strommesssensoren exakt bestimmt werden, da die Beziehung

$$I_{U1} + I_{V1} + I_{W1} = 0$$

gilt. In welchen zwei der drei Zuleitungen der zumindest einen ersten Maschine die Strommesssensoren angeordnet sind, ist aufgrund der obigen Beziehung unerheblich. Da die Ströme in allen korrespondierenden Zuleitungen der zumindest einen ersten Maschine bekannt sind, kann der eine Strommesssensor in jeder Zuleitung der zumindest einen zweiten Maschine eingefügt werden, ohne dass das Verfahren dadurch eingeschränkt wäre. Die beiden fehlenden Ströme in den Zuleitungen der zumindest einen zweiten Maschine können jederzeit geschätzt werden, da alle korrespondierenden Ströme der zumindest einen ersten Maschine bekannt sind.

Durch die Schätzung der nicht gemessenen Ströme in den Zuleitungen der zumindest einen zweiten Maschine können Aussagen über den Zustand der zumindest einen zweiten elektrischen Maschine getroffen werden. So kann bei Messung des Stromes in der Zuleitung W der zumindest einen zweiten Maschine durch Bildung des Summenstroms

$$\hat{I}_{U2} + \hat{I}_{V2} + I_{W2} = \delta$$

das Abweichungsmaß festgelegt werden, wobei gilt $\hat{I}_{U2} = I_{U1}$ und $\hat{I}_{V2} = I_{V1}$. Die Ströme in den Zuleitungen U und V der zumindest einen zweiten Maschine werden demnach durch die Ströme in den Zuleitungen U und V der zumindest einen ersten Maschine geschätzt. Selbstverständlich kann der Strommesssensor in jeder beliebigen Zuleitung der zumindest einen zweiten Maschine angeordnet sein.

Wenn nun die geschätzten Ströme den tatsächlichen Strömen entsprechen, also $\hat{I}_{U2} = I_{U2}$ und $\hat{I}_{V2} = I_{V2}$ gilt, so ist das Abweichungsmaß $\delta = 0$. Dieser Fall tritt üblicherweise bei der gleichen Belastung der Maschinen auf. Wenn aber die geschätzten Ströme von den tatsächlichen Strömen abweichen, dann ist das Abweichungsmaß $\delta$ eine positive oder

negative Zahl, abhängig davon, ob die zumindest eine zweite Maschine stärker oder schwächer belastet wird. Jedenfalls ist das Abweichungsmaß $\delta$ dann nicht mehr Null.

Weiter ist es vorteilhaft, wenn aus den gemessenen Strömen in den Zuleitungen der zumindest einen ersten Maschine ein erster Stromraumzeiger und aus dem gemessenen Strom in den Zuleitungen der zumindest einen zweiten Maschine und der Schätzung für die zwei nicht gemessenen Ströme ein zweiter Stromraumzeiger ermittelt wird. Dadurch kann eine geeignete Regelung auf Basis der Raumzeigerdarstellung, wie sie an sich aus dem Stand der Technik bekannt ist, verwendet werden. Die Stromraumzeiger berechnen sich dabei im Allgemeinen nach folgender Formel:

$$ \mathtt{i} \; = \; \mathtt{2/3\,(I_U + I_V * e^{j120°} + I_W * e^{j240°})}. $$

Mit $i_1$ und $i_2$ werden der erste bzw. der zweite Stromraumzeiger bezeichnet. Der erste Stromraumzeiger $i_1$ kann aus gemessenen bzw. berechneten Werten $I_{U1}$, $I_{V1}$ und $I_{W1}$ zu $i_1 = 2/3\,(I_{U1}+I_{V1}*e^{j120°}+I_{W1}*e^{j240°})$ bestimmt werden. Der zweite Stromraumzeiger berechnet sich wiederum zu $i_2 = 2/3\,(\hat{I}_{U2}+\hat{I}_{V2}*e^{j120°}+I_{W2}*e^{j240°})$. Dabei wurde wieder davon ausgegangen, dass der eine Strommesssensor in der Zuleitung W der zumindest einen zweiten Maschine angeordnet ist und die Ströme in den Zuleitungen U und V geschätzt werden. Mit den beiden Stromraumzeigern $i_1$ und $i_2$ können verschiedenste aus der Literatur bekannte Regelungsverfahren verwendet werden.

Darüber hinaus ist es möglich, dass auf Basis des zweiten Stromraumzeigers das Drehmoment der zumindest einen zweiten Maschine geschätzt wird. Dies ist mit bekannten Formeln für das Drehmoment einer elektrischen Maschine möglich, beispielsweise $T=IM\{\Psi \; i_2{}^*\}$. Dazu sind noch andere Kenntnisse über die Maschine nötig, wie beispielsweise der Flussverkettungsraumzeiger. Deren Bestimmung bzw. Berechnung ist ebenfalls aus der Literatur bereits bekannt.

Weiter kann auf Basis des ersten Stromraumzeigers das Drehmoment der zumindest einen ersten Maschine berechnet werden. Da der Stromraumzeiger $i_1$ berechnet und nicht geschätzt wird, ist auch eine Berechnung des Drehmoments der zumindest einen ersten Maschine möglich.

Um Abweichungen der zumindest einen ersten Maschine von der zumindest einen zweiten Maschine besser bestimmen zu können, ist es günstig, wenn ein Abweichungsmaß der Ströme der zumindest einen zweiten Maschine von der zumindest einen ersten Maschine aus der Phasen- und/oder Betragsdifferenz des ersten Stromraumzeigers zum zweiten Stromraumzeiger bestimmt wird. Wenn die geschätzten Stromwerte $\hat{I}_{ü2}$ und $\hat{I}_{V2}$ mit den tatsächlichen Stromwerten übereinstimmen, so haben die beiden Stromraumzeiger $i_1$ und $i_2$ den gleichen Betrag und die gleiche Phase. Wenn das Abweichungsmaß $\delta \neq 0$ ist, dann entsteht im Allgemeinen auch eine Differenz in Betrag und Phase des ersten Stromraumzeigers zum zweiten Stromraumzeiger. Phasen- und/oder Betragsdifferenz stellen daher ein zusätzliches Abweichungsmaß der Ströme der zumindest einen zweiten Maschine von der zumindest einen ersten Maschine dar. Beispielsweise könnte, je nach Anwendung, ein Schwellwert festgelegt werden, ab dem eine Regelung eingreift und einer Abweichung der beiden Maschinen entgegenwirkt. Ein solcher Schwellenwert wäre beispielsweise eine 10-prozentige Betragsabweichung der beiden Stromraumzeiger $i_1$ und $i_2$. Der konkrete Wert hängt allerdings von der Anwendung ab. Aber auch ein Schwellenwert auf Basis der Phase bzw. des Betrags und der Phase wäre denkbar.

Weiter ist es vorteilhaft, wenn durch Aufschalten von Spannungssprüngen $\Delta U$ in den Zuleitungen Stromänderungen entstehen, die durch die Strommesssensoren erfasst werden, und anhand der gemessenen korrespondierenden Stromänderungen ein Wicklungswiderstand ermittelt wird. Die Spannungssprünge $\Delta U$ in den Zuleitungen bewirken veränderte Ströme in den Zuleitungen, die mit den Strommesssensoren erfasst werden können. Nach dem Abklingen transienter Effekte (verursacht beispielsweise durch Induktivitäten) kann ein Stromsprung $\Delta I$ bestimmt werden. Durch Quotientenbildung des Spannungs- und des Stromsprunges einer Zuleitung nach dem Ohmschen Gesetz kann daher der Wicklungswiderstand berechnet werden. Für die Spannungs- bzw. Stromsprünge werden die Differenzspannungen und der Differenzströme vor und nach den Sprüngen und nach dem Abklingen transienter Effekte herangezogen.

Darüber hinaus ist es vorteilhaft für die Bestimmung der Betriebszustände der Maschinen, wenn durch Verwendung eines temperaturabhängigen Widerstandsmodells die Temperatur in den Wicklungen berechnet wird. Wird beispielsweise ein lineares Temperaturmodell der Form

$$ \mathtt{R \approx R_0 + (T-T_0) * \alpha} $$

verwendet, so kann bei Kenntnis des Widerstandes $R_0$ bei der Temperatur $T_0$, des Temperaturkoeffizienten $\alpha$ und des ermittelten Widerstandes R die Temperatur T in den Wicklungen bestimmt werden.

Um zusätzlich Informationen über den Maschinenzustand zu erhalten, kann durch Anlegen einer Spannung in den Strommesssensoren enthaltenden Zuleitungen und durch Messen des Anstiegs der korrespondierenden Ströme eine Induktivität ermittelt werden. Dazu können wieder Spannungssprünge $\Delta U$ in den Zuleitungen verwendet werden. Wird der Stromanstieg einer Zuleitung unmittelbar nach dem Spannungssprung $\Delta U$ in der Zuleitung verwendet, kann die Induktivität unter Vernachlässigung des Widerstandes bestimmt werden. Je nach Lage des Rotors weist die Induktivität einer Maschine auf Grund von Nutungseffekten unterschiedliche Werte auf.

Weiter kann auf Basis der ermittelten Induktivität eine Änderung der Position des Rotors, insbesondere ein Stillstand, ermittelt werden. Wenn sich der Rotor nicht dreht, bleibt auch die ermittelte Induktivität gleich. Dadurch kann ein Stillstand auch bei der zumindest einen zweiten Maschine erkannt werden. Wird bei der zumindest einen zweiten Maschine in der gemessenen Zuleitung bei mehreren Messungen der gleiche Stromanstieg registriert, so kann davon ausgegangen werden, dass der Rotor still steht.

Die erfindungsgemäße Vorrichtung der eingangs angeführten Art ist dadurch gekennzeichnet, dass in zwei der ersten Zuleitungen und in einer der weiteren Zuleitungen Strommesssensoren angeordnet sind und eine Schätzeinheit mit den Strommesssensoren verbunden ist, welche zur Schätzung der nicht erfassten Ströme der weiteren Zuleitungen auf Basis der korrespondierenden geschätzten Stromwerte der ersten Zuleitungen ausgebildet ist. Die Schätzeinheit kann beispielsweise als eigenständiges Bauteil in der Form eines Mikroprozessors vorhanden sein oder in andere Bauteile integriert sein.

Die Erfindung wird nachstehend anhand bevorzugter Ausführungsbeispiele, auf welche sie jedoch nicht beschränkt sein soll, im Detail erläutert. Die Figuren zeigen im Einzelnen:

Fig. 1 eine Anordnung zweier paralleler elektrischer Maschinen an einem Umrichter;
Fig. 2 ein Koordinatensystem mit zwei Stromraumzeigern, die dem ersten und dem zweiten Stromraumzeiger entsprechen;
Fig. 3 einen Spannungsverlauf und einen Stromverlauf zur Wicklungswiderstandsbestimmung; und
Fig. 4 eine Erweiterung des erfindungsgemäßen Verfahrens bzw. der erfindungsgemäßen Vorrichtung.

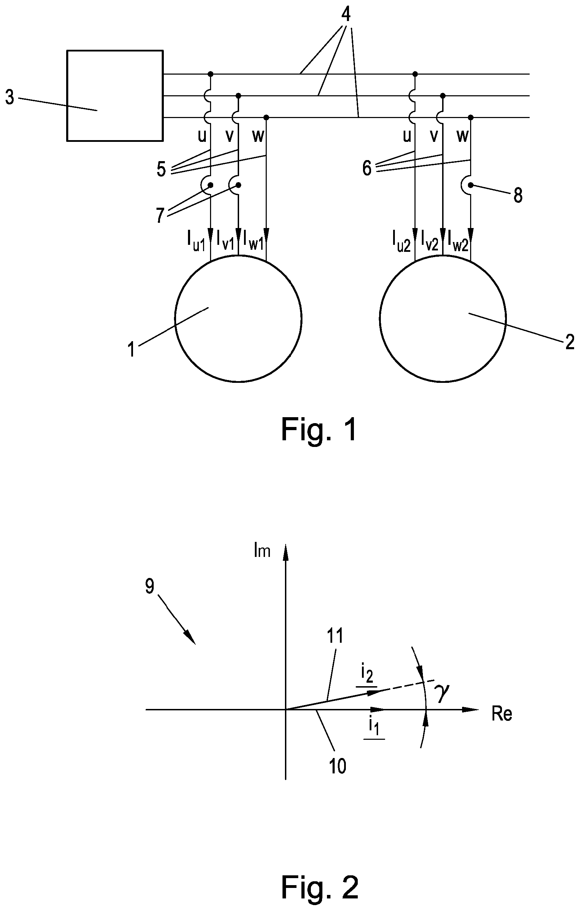

Fig. 1 zeigt eine erste elektrische Maschine 1 und eine zweite elektrische Maschine 2, die von einem gemeinsamen Umrichter 3 gespeist werden. Der Umrichter 3 verfügt dabei über drei Umrichterausgangsleitungen 4. Die erste Maschine 1 und die zweite Maschine 2 sind über je drei Zuleitungen 5 bzw. 6 an die Umrichterausgangsleitungen 4 und damit an den Umrichter 3 angeschlossen. In zwei der Zuleitungen 5 der ersten Maschine 1, in diesem Falle in den Zuleitungen U und V, sind zwei Strommesssensoren 7 angeordnet, die die Ströme in den beiden Zuleitungen messen. In einer der Zuleitungen 6 der zweiten Maschine 2, in diesem Fall in der Zuleitung W, ist ein weiterer Strommesssensor 8 angeordnet. An dieser Stelle sei nochmals erwähnt, dass die Anordnung der Strommesssensoren 7 in den Zuleitungen 5 der ersten Maschine 1 sowie des Sensors 8 in den Zuleitungen 6 der zweiten Maschine 2 beliebig sein kann.

Im Folgenden wird nun ein beispielhafter Betriebsfall dargestellt, mit dem das erfindungsgemäße Verfahren näher erläutert werden soll. Dazu wird zunächst angenommen, dass die erste Maschine 1 und die zweite Maschine 2 zu einem Zeitpunkt t=$T_1$ gleich belastet werden. Der Umrichter 3 legt gemäß einer Vorgabe an den Ausgang Spannungen an und in den Zuleitungen 5 und 6 fließen daher Ströme. Zum Zeitpunkt t=$T_1$ fließen in den Zuleitungen 5 und 6 die Ströme $I_{U1}=I_{U2}=1$, $I_{V1}=I_{V2}=-0.5$ und $I_{W1}=I_{W2}=-0.5$. Mit den Strommesssensoren 7 werden die Ströme $I_{U1}$ und $I_{V1}$ gemessen, woraus sich mit Hilfe von $I_{U1} + I_{V1} + I_{W1} = 0$ der Strom $I_{W1}$ ermitteln lässt. Mit dem Strommesssensor 8 lässt sich der Strom $I_{W2}$ messen.

Auf Basis der gemessenen Stromwerte $I_{U1}$ und $I_{V1}$ der zumindest einen ersten Maschine 1 werden die korrespondierenden nicht gemessenen Ströme $\hat{I}_{U2}$ und $\hat{I}_{V2}$ der zumindest einen zweiten Maschine 2 geschätzt. Geschätzte Größen werden mit einem Dachzeichen versehen. "Korrespondierend" bedeutet in diesem Zusammenhang "die gleiche Zuleitung/Phase". Bei dem vorliegenden Beispiel wird daher angenommen, dass zum Zeitpunkt t=$T_1$ in den nicht gemessenen Zuleitungen U und V der Zuleitungen 6 der zweiten Maschine 2 die Ströme $\hat{I}_{U2}=I_{U1}=1$ und $\hat{I}_{V2}=I_{V1}=-0.5$ fließen. Anschließend wird ein Abweichungsmaß δ gebildet, welches sich aus einem geschätzten Summenstrom $\hat{I}_{U2}+\hat{I}_{V2}+I_{W2}$ zu $\hat{I}_{U2}+\hat{I}_{V2}+I_{W2} = δ$ berechnet. Zum gewählten Zeitpunkt berechnet sich δ=0, da die Ströme in allen korrespondierenden Zuleitungen gleich sind.

Zu einem anderen Zeitpunkt t=$T_2$ fließen bei ungleicher Belastung der Maschinen beispielsweise in den Zuleitungen 5 der ersten Maschine 1 die Ströme $I_{U1}=1$, $I_{V1}=-0.5$ und $I_{W1}=-0.5$ und in den Zuleitungen 6 der zweiten Maschine 2 die Ströme $I_{U2}=1.2$, $I_{V2}=-0.6$ und $I_{W2}=-0.6$. Das Abweichungsmaß δ berechnet sich daher zu δ=-0.1. Daraus kann gefolgert werden, dass die Maschinen zum Zeitpunkt t=$T_2$ unterschiedlich belastet werden. Mit dieser Information können nun regelungstechnische Maßnahmen getroffen werden, wie sie aus der Literatur bekannt sind.

In Fig. 2 ist ein Koordinatensystem 9 mit einer reellen und mit einer imaginären Achse eingezeichnet. In einer bevorzugten Ausführungsform wird aus den gemessenen Strömen in den Zuleitungen 5 der zumindest einen ersten Maschine 1 ein erster Stromraumzeiger 10 gemäß

$$i_1 = 2/3(I_{U1} + I_{V1}*e^{j120°} + I_{W1}*e^{j240°})$$

gebildet. Aus dem gemessenen Strom $I_{W2}$ in den Zuleitungen 6 der zumindest einen zweiten Maschine 2 und der Schätzung $\hat{I}_{U2}$ und $\hat{I}_{V2}$ für die zwei nicht gemessenen Ströme wird gemäß

$$i_2 = 2/3(\hat{I}_{U2} + \hat{I}_{V2}*e^{j120°} + I_{W2}*e^{j240°})$$

ein zweiter Stromraumzeiger 11 ermittelt. Diese sind mit Betrag und Phase in das Koordinatensystem 9 eingetragen. Mit den obigen Werten zum Zeitpunkt t=$T_2$ kann man aus Fig. 2 entnehmen, dass sich der erste Stromraumzeiger 10 vom zweiten Stromraumzeiger in Betrag und Phase unterscheidet. Zum Zeitpunkt t=$T_1$ wäre der zweite Stromraumzeiger 11 mit dem ersten Stromraumzeiger 10 in Betrag und Phase ident, und diese Stromraumzeiger 10, 11 würden daher im Koordinatensystem 9 übereinander liegen. Mit Hilfe des zweiten Stromraumzeigers $i_2$ kann ein Drehmoment der zweiten Maschine 2 geschätzt werden, wie dies an sich aus dem Stand der Technik bekannt ist. Zudem kann mit dem ersten Stromraumzeiger $i_1$ ein Drehmoment der ersten Maschine 1 berechnet werden.

Wenn der erste Stromraumzeiger 10 und der zweite Stromraumzeiger 11 bestimmt worden sind, kann ein Abweichungsmaß der Ströme der ersten Maschine zu den Strömen der zweiten Maschine aus der Phasen- und/oder Betragsdifferenz des ersten Stromraumzeigers 10 zum zweiten Stromraumzeiger 11 bestimmt wird. Demnach kann die Betrags- und Phasendifferenz direkt als Abweichungsmaß herangezogen werden. Dadurch steht ein zweites Abweichungsmaß zur Verfügung, das die Belastungsunterschiede der Maschinen kennzeichnet. Decken sich Betrag und Phase des ersten Stromraumzeigers 10 und des zweiten Stromraumzeigers 11, so sind die erste Maschine 1 und die zweite Maschine 2 gleich belastet.

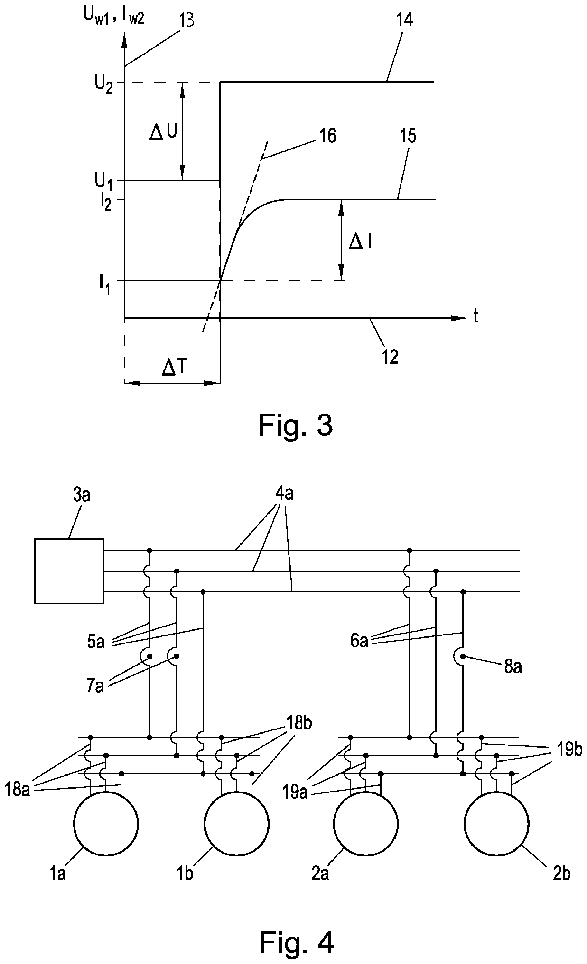

Fig.3 zeigt ein Diagramm, das eine Wicklungswiderstandsbestimmung verdeutlichen soll. Die Abszisse stellt dabei eine Zeitachse 12 und die Ordinate eine gemeinsame Achse 13 für Strom I und Spannung U der Zuleitung bzw. Phase W der Maschine 2 dar. Im Diagramm sind ein beispielhafter Spannungsverlauf 14 mit einem Spannungssprung $\Delta U$ und ein beispielhafter Stromverlauf 15 mit einem Stromsprung $\Delta I$ der Zuleitung W der zweiten Maschine 2 dargestellt. Ein solcher Spannungsverlauf entsteht durch das Umschalten eines Spannungsraumzeigers $u_1$ auf einen anderen Spannungsraumzeiger $u_2$. Die Spannungsraumzeiger werden vom Umrichter 3 vorgegeben werden und gemäß

$$u = 2/3(U_U + U_V*e^{j120°} + U_W*e^{j240°})$$

berechnet. Der Spannungsraumzeiger $u_1$ bewirkt einen Strom in den einzelnen Zuleitungen, der mit den Strommesssensoren 7 und 8 in den jeweiligen Zuleitungen erfasst wird. Der in Fig.3 gezeigte Stromverlauf 15 der Zuleitung W der zweiten Maschine 2 wird mittels des Strommesssensors 8 gemessen. Nach der Zeit $\Delta T$ erfolgt in diesem Beispiel ein Spannungssprung $\Delta U$ durch das sprungartige Umschalten der Spannungsraumzeiger von $u_1$ auf $u_2$. Durch das Anlegen des neuen Spannungsraumzeigers $u_2$ verändert sich auch die Spannung U der Zuleitung/Phase W der Maschine 2 von einer Spannung $U_1$ auf eine Spannung $U_2$, wobei $\Delta U=U_2-U_1$ gilt. Infolgedessen ändert sich auch der Strom $I_W$ in der Zuleitung W gemäß dem Stromverlauf 15 annähernd sprungartig. Nach dem Abklingen transienter Effekte wird der Stromsprung $\Delta I$ ermittelt und der Wicklungswiderstand $R_{2W}$ der Phase W der zweiten Maschine 2 durch

$$R_{W2} = \Delta U/\Delta I$$

bestimmt. Dabei wurden lediglich die Differenzen der Spannungen und Ströme, also die Sprünge $\Delta U$ und $\Delta I$ verwendet. Die Wicklungswiderstandsbestimmung kann in allen Zuleitungen, in denen auch die Ströme gemessen bzw. berechnet werden können, analog durchgeführt werden. Demnach ist dies bei allen drei Zuleitungen 5 der ersten Maschine 1 und in der Zuleitung der zweiten Maschine 2, in welcher der Strommesssensor 8 angeordnet ist, möglich. In diesem Beispiel ist dies die Zuleitung W.

Wenn ein Wicklungswiderstand bekannt ist, kann durch Verwendung eines temperaturabhängigen Widerstandsmodells die Temperatur in der Wicklung bestimmt werden. Wird beispielsweise ein lineares Modell der Form

$$R_{2W} \approx R_0 + (T-T_0)*\alpha$$

verwendet, kann durch Umformung der Gleichung auf die Temperatur T in der Wicklung W der zweiten Maschine 2 rückgeschlossen werden, wenn der Widerstand $R_0$ bei der Temperatur $T_0$ und der Temperaturkoeffizient $\alpha$ bekannt sind. Es kann auch ein Temperaturmodell höherer Ordnung verwendet werden.

Aus Fig.3 ist zudem ersichtlich, dass der Stromsprung nicht instantan erfolgt, sondern einen anfänglichen Stromanstieg 16 aufweist. Dieser Stromanstieg 16 ist auf eine Induktivität der zweiten Maschine 2 zurückzuführen. Selbstverständlich gilt dies für alle verwendeten Maschinen. Die Induktivität kann mit Hilfe des Stromanstieges 16 bestimmt werden. Dies erfolgt nach der Gleichung $\Delta U \approx L \cdot dI/dt$, wobei L die Induktivität und dI/dt den Stromanstieg 16 bezeichnet. Wird der Stromanstieg 16 unmittelbar nach dem Spannungssprung $\Delta U$ herangezogen, so kann der Wicklungswiderstand R vernachlässigt werden, da der Strom $I_{W2}$ zum Zeitpunkt $\Delta T$ unmittelbar nach dem Spannungssprung $\Delta U$ annähernd konstant bleibt und die gesamte Spannung $\Delta U$ an der Induktivität abfällt. Die Induktivität berechnet sich daher aus

$$L \approx \Delta U / (dI/dt)$$

Wenn sich der Rotor einer Maschine dreht, ändert sich die Induktivität. Dies ist beispielsweise bei einer Asynchronmaschine auf die Nutungseffekte zurückzuführen. Steht der Rotor hingegen still, so bleibt die Induktivität konstant. Dadurch ist es möglich, dass auf Basis der ermittelten Induktivität eine Änderung der Position des Rotors, insbesondere ein Stillstand, ermittelt wird. Wird also mit Hilfe des Stromanstiegs 16 und des Spannungssprungs $\Delta U$ die Induktivität der Phase W der zweiten Maschine bestimmt, so kann zuverlässig ein Rotorstillstand erkannt werden, wenn diese konstant bleibt.

Fig. 4 zeigt eine Weiterentwicklung des vorliegenden Verfahrens bzw. der vorliegenden Vorrichtung. Dabei sind zwei erste Maschinen 1a und 1b und zwei zweite Maschinen 2a und 2b vorgesehen. Die Maschinen werden von einem Umrichter 3a gespeist. Die ersten Maschinen 1a und 1b werden parallel geschaltet und werden von Zuleitungen 5a versorgt. In zwei der Zuleitungen 5a ist jeweils ein Strommesssensor 7a angeordnet. Die Zuleitungen 5a teilen sich nach den Strommesssensoren 7a in Maschinenzuleitungen 18a und 18b auf. Die zweiten Maschinen 2a und 2b sind ebenfalls parallel geschaltet und werden über Zuleitungen 6a versorgt. In einer der Zuleitungen 6a ist ein Strommesssensor 8a angeordnet. Die Zuleitungen 6a teilen sich nach dem Strommesssensor 8a in Maschinenzuleitungen 19a und 19b auf. Die Zuleitungen 5a und 6a werden über Umrichterausgangsleitungen 4a mit dem Umrichter 3a verbunden. Mit Hilfe der Strommesssensoren 7a können die Ströme $I_{1U}$ und $I_{1V}$ gemessen werden. Aus der Gleichung $I_{1U} + I_{1V} + I_{1W} = 0$ kann der Strom $I_{1W}$ bestimmt werden. Auf Basis der so ermittelten Ströme in den Zuleitungen 5a können die nicht gemessenen Ströme in den Zuleitungen 6a geschätzt werden, wie dies auch bei der Ausführungsform gemäß Fig. 1 geschieht. Dadurch kann in weiterer Folge ebenfalls ein Abweichungsmaß $\delta$ bestimmt werden, das sich gemäß $\hat{I}_{U2} + \hat{I}_{V2} + I_{W2} = \delta$ berechnet. Selbstverständlich ist auch hier die Anordnung der Strommesssensoren 7a und 8a in den Zuleitungen 5a und 6a beliebig, ohne dass das Verfahren dadurch eingeschränkt wäre. Da die Aufteilung der Zuleitungen 5a und 6a in die Maschinenzuleitungen 18a,b und 19a,b nach den Strommesssensoren 7a und 8a geschieht, stellen die gemessenen Ströme Durchschnittswerte der ersten Maschinen bzw. der zweiten Maschinen dar. Daher stellen auch die Schätzungen $\hat{I}_{U2}$ und $\hat{I}_{V2}$, in diesem Fall die Schätzungen für die Zuleitungen U und V der zweiten Maschinen 2a und 2b, Durchschnittswerte der zweiten Maschinen 2a und 2b dar. Die anhand der Fig. 1 bis 3 beschriebenen Darstellungen und Verfahrensschritte lassen sich nun analog auf die erweiterte Anordnung gemäß Fig. 4 anwenden. Selbstverständlich ist es auch möglich, mehr als zwei erste Maschinen 1a und 1b bzw. mehr als zwei zweite Maschinen 2a und 2b zu verwenden. Das gezeigte Prinzip bleibt dabei erhalten.

**Patentansprüche**

1. Verfahren zum Detektieren von Belastungsunterschieden zwischen zumindest einer ersten elektrischen Maschine (1) und zumindest einer parallel dazu geschalteten zweiten elektrischen Maschine (2), welche von einem Umrichter (3) gespeist werden, wobei die Maschinen je über drei Zuleitungen (5,6) an den Umrichter (3) angeschlossen sind, wobei in zwei Zuleitungen (5) der zumindest einen ersten Maschine (1) sowie in einer der Zuleitungen (6) der zumindest einen zweiten Maschine (2) die Ströme mit Hilfe von Strommesssensoren (7,8) in den jeweiligen Zuleitungen gemessen werden, **dadurch gekennzeichnet, dass** auf Basis der gemessenen Stromwerte ($I_{u1}$; $I_{v1}$) der zumindest einen ersten Maschine (1) die korrespondierenden nicht gemessenen Ströme ($I_{u2}$; $I_{v2}$) der zumindest einen zweiten Maschine (2) geschätzt werden, und dass der geschätzte Summenstrom der Zuleitungen (6) der zumindest einen zweiten Maschine (2) als Abweichungsmaß der Ströme der zumindest einen zweiten Maschine (2) von der zumindest einen ersten Maschine (1) erfasst wird.

2. Verfahren nach Anspruch 1, **dadurch gekennzeichnet, dass** aus den gemessenen Strömen in den Zuleitungen (5) der zumindest einen ersten Maschine (1) ein erster Stromraumzeiger (10) und aus dem gemessenen Strom in den Zuleitungen (6) der zumindest einen zweiten Maschine (2) und der Schätzung für die zwei nicht gemessenen Ströme ein zweiter Stromraumzeiger (11) ermittelt wird.

**3.** Verfahren nach Anspruch 2, **dadurch gekennzeichnet, dass** auf Basis des zweiten Stromraumzeigers (11) ein Drehmoment der zumindest einen zweiten Maschine (2) geschätzt wird.

**4.** Verfahren nach Anspruch 2 oder 3, **dadurch gekennzeichnet, dass** auf Basis des ersten Stromraumzeigers (10) ein Drehmoment der zumindest einen ersten Maschine (1) berechnet wird.

**5.** Verfahren nach einem der Ansprüche 2 bis 4, **dadurch gekennzeichnet, dass** ein Abweichungsmaß der Ströme der zumindest einen zweiten Maschine (2) von der zumindest einen ersten Maschine (1) aus der Phasen- und/oder Betragsdifferenz des ersten Stromraumzeigers (10) zum zweiten Stromraumzeiger (11) bestimmt wird.

**6.** Verfahren nach einem der Ansprüche 1 bis 5, **dadurch gekennzeichnet, dass** durch Aufschalten von Spannungssprüngen $\Delta U$ in den Zuleitungen (5,6) Stromänderungen entstehen, die durch die Strommesssensoren (7,8) erfasst werden, und anhand der gemessenen korrespondierenden Stromänderungen ein Wicklungswiderstand ermittelt wird.

**7.** Verfahren nach Anspruch 6, **dadurch gekennzeichnet, dass** durch Verwendung eines temperaturabhängigen Widerstandsmodells die Temperatur in den Wicklungen berechnet wird.

**8.** Verfahren nach einem der Ansprüche 1 bis 7, **dadurch gekennzeichnet, dass** durch Anlegen einer Spannung in den Strommesssensoren (7,8) enthaltenden Zuleitungen (5,6) und durch Messen des Stromanstiegs (16) der korrespondierenden Ströme eine Induktivität ermittelt wird.

**9.** Verfahren nach Anspruch 8, **dadurch gekennzeichnet, dass** auf Basis der ermittelten Induktivität eine Änderung der Position des Rotors, insbesondere ein Stillstand, ermittelt wird.

**10.** Vorrichtung zum Detektieren von Belastungsunterschieden zwischen parallelen elektrischen Maschinen mit drei ersten Zuleitungen (5) zu zumindest einer ersten Maschine (1) und drei weiteren Zuleitungen (6) zu zumindest einer zweiten Maschine (2), wobei in zwei der ersten Zuleitungen (5) und in einer der weiteren Zuleitungen (6) Strommesssensoren (7,8) angeordnet sind, **dadurch gekennzeichnet dass** die Vorrichtung ferner eine Schätzeinheit aufweist, die mit den Strommesssensoren verbunden ist, wobei die Schätzeinheit zur Schätzung der nicht erfassten Ströme ($I_{u2}; I_{v2}$) der weiteren Zuleitungen (6) auf Basis der korrespondierenden gemessenen Stromwerte der ersten Zuleitungen (5) und zur Erfassung des geschätzten Summenstroms der Zuleitungen der zumindest zweiten Maschine (2) als Abweichmaß der Ströme der zumindest zweiten Maschine (2) von der zumindest ersten Maschine (1) ausgebildet ist.

**11.** Vorrichtung Anspruch 10, **dadurch gekennzeichnet, dass** die zumindest eine erste Maschine (1) und die zumindest eine zweite Maschine (2) Asynchronmaschinen sind.

**Claims**

**1.** Method for detecting load differences between at least one first electrical machine (1) and at least one second electrical machine (2), connected in parallel thereto, which machines are powered by a converter (3), the machines each being connected to the converter (3) via three supply lines (5, 6), the currents in two supply lines (5) of the at least one first machine (1) and in one of the supply lines (6) of the at least one second machine (2) being measured in the respective supply lines using current measuring sensors (7, 8), **characterised in that**, on the basis of the measured current values ($I_{U1}; I_{V1}$) of the at least one first machine (1), the corresponding unmeasured currents ($I_{U2}; I_{V2}$) of the at least one second machine (2) are estimated, and **in that** the estimated total current of the supply lines (6) of the at least one second machine (2) is detected as a measure of the deviation of the currents of the at least one second machine (2) from the at least one first machine (1).

**2.** Method according to claim 1, **characterised in that** a first current space vector (10) is determined from the measured currents in the supply lines (5) of the at least one first machine (1) and a second current space vector (11) is determined from the measured current in the supply lines (6) of the at least one second machine (2) and the estimate for the two unmeasured currents.

**3.** Method according to claim 2, **characterised in that** a torque of the at least one second machine (2) is estimated on the basis of the second current space vector (11).

**4.** Method according to either claim 2 or claim 3, **characterised in that** a torque of the at least one first machine (1) is calculated on the basis of the first current space vector (10).

**5.** Method according to any of claims 2 to 4, **characterised in that** a measure of the deviation of the currents of the at least one second machine (2) from the at least one first machine (1) is determined from the phase difference and/or value difference of the first current space vector (10) from the second current space vector (11).

**6.** Method according to any of claims 1 to 5, **characterised in that**, by activating voltage jumps $\Delta U$ in the supply lines (5, 6), current changes occur which are detected by the current measuring sensors (7, 8), and a winding resistance is determined on the basis of the corresponding measured current changes.

**7.** Method according to claim 6, **characterised in that** the temperature in the windings is calculated by using a temperature-dependent resistance model.

**8.** Method according to any of claims 1 to 7, **characterised in that** inductance is determined by applying a voltage in the supply lines (5, 6) containing the current measuring sensors (7, 8) and by measuring the current increase (16) of the corresponding currents.

**9.** Method according to claim 8, **characterised in that** a change in the position of the rotor, in particular an outage, is determined on the basis of the determined inductance.

**10.** Device for detecting load differences between parallel electrical machines having three first supply lines (5) to at least one first machine (1) and three further supply lines (6) to at least one second machine (2), current measuring sensors (7, 8) being arranged in two of the first supply lines (5) and in one of the further supply lines (6), **characterised in that** the device further has an estimation unit which is connected to the current measuring sensors, the estimation unit being designed to estimate the undetected currents ($I_{U2}$; $I_{V2}$) of the further supply lines (6) on the basis of the corresponding measured current values of the first supply lines (5) and to detect the estimated total current of the supply lines of the at least second machine (2) as a measure of the deviation of the currents of the at least second machine (2) from the at least first machine (1).

**11.** Device according to claim 10, **characterised in that** the at least one first machine (1) and the at least one second machine (2) are asynchronous machines.

## Revendications

**1.** Procédé de détection de différences de charges entre au moins une première machine (1) électrique et au moins une deuxième machine (2) électrique montée en parallèle avec celle-ci, lesquelles sont alimentées par un convertisseur de fréquence (3), les machines étant respectivement connectées au convertisseur de fréquence (3) par le biais de trois lignes d'amenée (5, 6), dans lequel, dans deux lignes d'amenée (5) de la première machine (1) au moins au nombre de un ainsi que dans une des lignes d'amenée (6) de la deuxième machine (2) au moins au nombre de un, les courants sont mesurés à l'aide de capteurs de mesure de courant (7, 8) dans les lignes d'amenée respectives, **caractérisé en ce que**, sur la base des valeurs de courants mesurées ($I_{u1}$;$I_{v1}$) de la première machine (1) au moins au nombre de un, les courants ($I_{u2}$;$I_{v2}$) non mesurés correspondants de la deuxième machine (2) au moins au nombre de un sont estimés, et **en ce que** le courant total estimé des lignes d'amenée (6) de la deuxième machine (2) au moins au nombre de un est détecté en tant que mesure de divergence des courants de la deuxième machine (2) au moins au nombre de un par rapport à la première machine (1) au moins au nombre de un.

**2.** Procédé selon la revendication 1, **caractérisé en ce qu'**un premier vecteur spatial de courant (10) est déterminé à partir des courants mesurés dans les lignes d'amenée (5) de la première machine (1) au moins au nombre de un, et un deuxième vecteur spatial de courant (11) est déterminé à partir du courant mesuré dans les lignes d'amenée (6) de la deuxième machine (2) au moins au nombre de un et de l'estimation pour les deux courants non mesurés.

**3.** Procédé selon la revendication 2, **caractérisé en ce qu'**un couple de la deuxième machine (2) au moins au nombre de un est estimé sur la base du deuxième vecteur spatial de courant (11).

**4.** Procédé selon la revendication 2 ou 3, **caractérisé en ce qu'**un couple de la première machine (1) au moins au nombre de un est calculé sur la base du premier vecteur spatial de courant (10).

**5.** Procédé selon l'une des revendications 2 à 4, **caractérisé en ce qu'**une mesure de divergence des courants de la deuxième machine (2) au moins au nombre de un par rapport à la première machine (1) au moins au nombre de un est définie à partir de la différence de phase et/ou de montant du premier vecteur spatial de courant (10) par rapport au deuxième vecteur spatial de courant (11).

**6.** Procédé selon l'une des revendications 1 à 5, **caractérisé en ce que** l'intrusion de sauts de tension ΔU dans les lignes d'amenée (5, 6) provoque des variations de courant qui sont détectées par les capteurs de mesure de courant (7, 8), et une résistance d'enroulement est déterminée à l'aide des variations de courants correspondantes mesurées.

**7.** Procédé selon la revendication 6, **caractérisé en ce que** la température dans les enroulements est calculée par l'utilisation d'un modèle de résistance qui dépend de la température.

**8.** Procédé selon l'une des revendications 1 à 7, **caractérisé en ce qu'**une inductance est déterminée par l'application d'une tension dans les lignes d'amenée (5, 6) contenant des capteurs de mesure de courant (7, 8) et par la mesure de l'augmentation de courant (16) des courants correspondants.

**9.** Procédé selon la revendication 8, **caractérisé en ce qu'**une variation de la position du rotor, en particulier un arrêt, est déterminée sur la base de l'inductance déterminée.

**10.** Dispositif de détection de différences de charges entre des machines électriques parallèles avec trois premières lignes d'amenée (5) menant au moins vers une première machine (1) et trois autres lignes d'amenée (6) menant vers au moins une deuxième machine (2), des capteurs de mesure de courant (7, 8) étant disposés dans deux des premières lignes d'amenée (5) et dans une des autres lignes d'amenée (6), **caractérisé en ce que** le dispositif comporte en outre une unité d'estimation qui est raccordée aux capteurs de mesure de courant, l'unité d'estimation étant constituée pour l'estimation des courants ($I_{u2}$;$I_{v2}$) non détectés des autres lignes d'amenée (6) sur la base des valeurs de courant mesurées correspondantes des premières lignes d'amenée (5), et pour la détection du courant total estimé des lignes d'amenée de la deuxième machine (2) au moins au nombre de un en tant que mesure de divergence des courants de la deuxième machine (2) au moins au nombre de un par rapport à la première machine (1) au moins au nombre de un.

**11.** Dispositif selon la revendication 10, **caractérisé en ce que** la première machine (1) au moins au nombre de un et la deuxième machine (2) au moins au nombre de un sont des machines asynchrones.

EP 3 422 557 B1

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090309529 A1
- US 20060012322 A1
- US 4298831 A
- JP 2002112404 A
- JP 2011072062 A
- US 2007273310 A1